# EUROPEAN PATENT APPLICATION

(11) **EP 2 647 859 A1**
(43) Date of publication of application: **09.10.2013**
(21) Application number: 11826103.1
(22) Date of filing: 25.11.2011
(51) Int. Cl.: F16C 33/54, F16C 33/51

(54) **SEGMENTED RETAINER FOR ROLLING-BEARING**

(30) Priority: 30.11.2010 JP 2010266694; 24.12.2010 JP 2010286974
(71) Applicant: NSK Ltd., Tokyo 141-8560 (JP)
(72) Inventor: HACHISUKA, Satoshi, Takasaki-shi Gunma 370-3344 (JP)
(74) Representative: Hartmann, Jean-Luc
(86) International application number: PCT/JP2011/077253
(87) International publication number: WO 2012/073839

(57) **Abstract**

Provides is a split-type retainer for a rolling bearing that is capable of preventing vibration, noise and damage due to collision between the end surfaces in the circumferential direction of the split section without an increase in manufacturing cost. The split section 25 comprises: an end section 27 on one side having a convex section 29 with protrusions 31 as a first engagement section; and an end section 28 on the other side having a concave section 30 with engagement holes 32 as a second engagement section that is capable of fitting with the convex section 29; and the end section 27 on the one side and the end section 28 on the other side can be connected by fitting together the convex section 29 and concave section 30, and engaging the protrusions 31 and engagement holes 32. The engagement between the protrusions 31 and engagement holes 32 prevent collision of the end surfaces in the circumferential direction of the split section 25.

## Description

### TECHNICAL FIELD

The present invention relates to a split-type retainer that is used in a roller bearing that supports a rotating mechanism in an internal-combustion engine of an automobile, and that is split in at least one location in the circumferential direction.

### BACKGROUND ART

Typically, sliding bearings are used in internal-combustion engines, such as automobile engines, as bearings for supporting the crankshaft and cam shaft such that they can rotate freely. However, in recent years, from the aspects of more effective use of natural resources and reducing carbon dioxide, internal-combustion engines, which are more fuel efficient, have gained much attention.

For example, JP08-128306(A) discloses a method of reducing dynamic loss in an internal-combustion engine by using rolling bearings, such as needle roller bearings having smaller drag resistance, instead of a sliding bearings. Particularly, in a DOHC engine or V-engine for an autombile, from a structural aspect, there is a large number of cam shafts, so by changing the bearings for supporting the cam shafts from sliding bearings to rolling bearings, an improvement in fuel efficiency is expected.

Incidentally, in the cam shafts in an internal-combustion engine, normally, there is a pair of cam lobes for each cylinder, and a journal section that is supported by a rolling bearing is located between the cam lobes or between one of the cam lobe and a large-diameter end section of the cam shaft. Therefore, for a normal rolling bearing, there is a problem in that mounting to the journal section may not be possible passed protruding cam lobes further on the outer-diameter side.

Therefore, in order to simplify assembly of a rolling bearing in a rotating mechanism having this kind of problem, a split-type retainer may be used. For example, JP2001-12214(A) and JP2005-90696(A) disclose a method of using a split-type retainer that is split in two in the circumferential direction as the retainer for the rolling bearing in order to enable assembly to the journal section from the outer-diameter side without going passed the rolling bearing cam lobes.

FIG. 14 illustrates a roller bearing that supports the cam shaft of a cylinder head as disclosed in JP2005-90696(A). The split-type roller bearing 1 has a plurality of rollers (needle-shaped rollers) 2, half cylinder shaped retainers 3a, 3b that are divided in two in the circumferential direction, and half cylinder outer rings 6a, 6b that are divided in two in the circumferential direction and located between the cylinder head 4 and cap 5. The inner circumferential surfaces of the outer rings 6a, 6b constitute raceways for the rollers 2. Both end sections in the circumferential direction of the retainer 3a are formed into a wave (uneven) shape that resembles a sine curve, and both end sections in the circumferential direction of the opposing retainer 3b is a complementary wave (uneven) shape. One end in the circumferential direction of the outer ring 6a is wedge shaped, and the other end is valley shaped, and one end in the circumferential direction of the opposing outer ring 6b is a complementary valley shape, and the other end is a complementary wedge shape. In a split-type roller bearing 1 wherein the ring and retainer are split in two in this way, there is a problem in that while the roller bearing 1 is in operation, the surfaces on the ends in the circumferential direction of the split sections of the retainers 3a, 3b collide, which causes vibration, noise and damage.

As a countermeasure to this is a retainer 3c, 3d for a split-type roller bearing as illustrated in FIG. 15 and disclosed in JP2007-247814(A), wherein the retainer 3c, 3d is uniformly split into two in the circumferential direction, and in the split section 7 of the retainer 3c, 3d a convex section 8 is formed in the end section in the circumferential direction of one half of the split retainer 3c, and on the end section in the circumferential direction of the other half of the retainer 3d a concave section 9 that fits with the convex section 8 is formed. The convex section 8 and concave section 9 are formed along the axial direction of the retainer 3c 3d, and an insertion through hole 10 is formed therein. By connecting the split section 7 into one by inserting a connecting pin 11 into the insertion through hole 10, vibration, noise and damage that occur when the end surfaces in the circumferential direction of the split section collide are prevented. However, in this kind of retainer for a split-type roller bearing, a connecting pin 11 is used for connecting the retainer, so there is a possibility that the cost will increase because of an increase in the number of parts.

A split-type retainer that is split in one location as illustrated in FIG. 16 and disclosed in JP2006-57707(A) and JP2006-322581(A) may be used as the split-type retainer. The single-split retainer 12 comprises a pair of ring-shaped rim sections 13a, 13b, and a plurality of column sections 14 that are parallel with each other and uniformly spaced in the circumferential direction, with a plurality of pockets 15 being formed by these rim sections 13a, 13b and column sections 14. This retainer 12 comprises a split section 16 in one location in the circumferential direction that is formed along a direction that is orthogonal to the circumferential direction (along the radial direction and axial direction).

In the case where a single-split retainer 12 that is integrally formed of resin, for example, is installed around a rotating shaft that corresponds to the inner ring, first, the split section 16 that is split in the radial direction is separated and opened up so that the retainer 12 is elastically deformed from the initial shape. Next, the rotating shaft is housed inside the retainer 12 by passing through the opening section that is formed by the expanded split section 16. After the force used to expand the split section 16 has been released, the single-split retainer 112 returns to the initial shape by its own elastic return force (recovery force), and the retainer 12 is installed around the rotating shaft.

In this kind of single-split retainer 12 made of resin, in order to fix or improve the rigidity and strength of the retainer as the diameter of the plurality of rolling bodies (rollers) supported by this retainer 12 becomes large, it is necessary to increase the thickness of the retainer itself. Depending on the size of this thickness, it may become difficult to separate and expand the split section of the retainer 12, elastically deforming the retainer 12.

In this case, as the split section 16 is expanded and the retainer 12 is forcibly and elastically deformed, there is a possibility that the retainer may be damaged or broken, and depending on the size of "strain" that occurs during elastic deformation, there is a possibility that even though the force expanding this split section 16 is released, there may be plastic deformation and the retainer 12 will not return to the initial shape.

Furthermore, when the split section 16 is expanded and the retainer 12 is forcibly and elastically deformed, depending on the amount of elastic deformation, there is a possibility that the rolling bodies will drop from the pockets 15 in the retainer 12, or that the position of the rolling bodies will shift inside the pockets 15.

In this case, it becomes difficult to install the retainer 12 in a rotating mechanism such as a crankshaft and camshaft with the plurality of rolling bodies being held in the retainer 12 and thus with high yield rate. Therefore, development of a single-split retainer made of resin having an opening section for expanding split section 16 regardless of the size of the thickness of the retainer 12, and that allows the retainer 12 to return to the initial shape by simply releasing the force for expanding the split section 16 is desired.

Moreover, even in this kind of single-split retainer 12, while the bearing is operating, there is a problem in that the end surfaces 17a, 17b in the circumferential direction of the split section 16 of the retainer will collide, causing vibration, noise or damage, so as in the case of a double-split retainer, preventing this is desired.

### [Related Literature]

### [Patent Literature]

[Patent Literature 1] JP08-128306(A)
[Patent Literature 2] JP2001-12214(A)
[Patent Literature 3] JP2005-90696(A)
[Patent Literature 4] JP2007-247814(A)
[Patent Literature 5] JP2009-57707(A)
[Patent Literature 6] JP2010-322581(A)

### SUMMARY OF THE INVENTION

### [Problem to be Solved by the Invention]

In consideration of the problems above, it is the object of the present invention to provide a retainer for split-type rolling bearing wherein even when the retainer of the rolling bearing is split or open in the circumferential direction, and installed around a rotating mechanism such as a cam shaft or crank shaft, it is possible to prevent vibration, noise, damage and the like from occurring due to the end surfaces in the circumferential direction of the split section of the retainer colliding, and does not bring about an increase in manufacturing cost.

Furthermore, another object of the present invention is to provide a single-split retainer made of resin that has an opening section for expanding the split section, and that makes it possible for the retainer to return to the initial shape by simply releasing the force expanding the split section regardless of the size of the thickness of the retainer, and is capable of excellent yield.

### [Means for Solving the Problems]

The present invention relates to a ring-shaped split-type retainer for a rolling bearing that comprises at least one split section that is split in a direction orthogonal to the circumferential direction. More specifically, after assembly the retainer comprises: a pair of ring-shaped rim sections; a plurality of parallel column sections that are uniformly spaced in the circumferential direction and that connect the rim sections; and a plurality of pockets that are formed by the rim sections and the column sections. The split-type retainer for a rolling bearing of the present invention includes: a split-type retainer for a rolling bearing having two splits or more which comprises at least two split sections in the circumferential direction, and thus is divided into at least two sections in the circumferential direction; and a split-type retainer for a rolling bearing having a single split which is split in direction orthogonal to the circumferential direction at one location in the circumferential direction and thus the split section is provided at one location in the circumferential direction.

In a first aspect of the split-type retainer for a rolling bearing, the split section comprises: an end section on one side having a convex section with a first engagement section; and an end section on the other side having a concave section with a second engagement section that is capable of fitting with the convex section; and the end section on the one side and the end section on the other side can be connected by fitting together the convex section and concave section, and engaging the first engagement section and second engagement section.

More specifically, as the construction of the connecting section, the contour of the outer surface of the convex section is trapezoidal, becoming wider going toward the end section on the other side, the portions on both sides in the width direction of the convex section form a first engagement section, the contour of the opening surface of the concave section is trapezoidal, becoming wider in the direction going away from the end second on the one side, and the portions on both sides in the width direction of the concave section form a second engagement section.

Alternatively, the first engagement section is hook sections that are formed on both sides in the width direction of the tip end section in the circumferential direction of the convex section, and the second engagement section is engagement tabs that are formed on both sides in the width direction of the end section of the opening in the circumferential direction of the concave section.

Furthermore, construction can be such that both the outer surface of the convex section and the opening of the concave section are rectangular, the first engagement section is composed of protrusions that are formed on the side surfaces of the convex section and the second engagement section is composed of engagement holes that are formed on the side surfaces of the concave section. Alternatively, the first engagement section is composed of protrusions that are formed on the side surfaces of the concave section and the second engagement section is composed of engagement holes that are formed on the side surfaces of the convex section. The protrusions and the engagement holes are formed such that the positions thereof correspond with each other after assembly. Preferably the engagement holes are through holes that pass through from the outside surfaces in the axial direction of the retainer to the side surfaces of the concave section. Moreover, preferably both the convex section and concave section are formed in the middle section in the width direction of the end section of the one side and the end section of the other side (middle section in the axial direction of the retainer). However, the convex section and concave section can be formed on one half in the width direction of the end section on the one side and the end section of the other side.

In the case of a retainer having two or more splits, the retainer comprises two or more split sections in the circumferential direction that are split in at least two in the circumferential direction and split in directions orthogonal to the circumferential direction, however, in the present invention, in at least one of these split sections, the end section on one side comprises a convex section having a first engagement section, the end section on the other side comprises a concave section having a second engagement section, and the end section on the one side and the end section on the other side can be connected by fitting together the convex section and concave section, and engaging the first engagement section and second engagement section. However, the construction of this connecting section can also be employed for a plurality of split sections.

The split-type retainer for a rolling bearing of a second aspect of the present invention relates to a ring-shaepd split-type retainer for a rolling bearing having a single split which is split in direction orthogonal to the circumferential direction at one location in the circumferential direction. Moreover, in addition to the split section, a thin section is formed in the axial direction and in at least one location in the circumferential direction other than the location where the split section exists.

This split-type retainer for a rolling bearing having a single split comprises: a pair of ring-shaped rim sections; a plurality of parallel column sections that are uniformly spaced in the circumferential direction and that connect the rim sections; and a plurality of pockets that are formed by the rim sections and the column sections.
The thin section(s) is/are continuously formed along at least one column section and across the rim sections.

The thin section(s) should be formed in at least one of the inner circumferential surface and outer circumferential surface.

### [Effect of the Invention]

With the first aspect of the present invention, it is possible for the retainer to effectively prevent vibration, noise, damage and the like due to collision between the end surfaces in the circumferential direction of the split section, without an increase in manufacturing cost.

Furthermore, with the second aspect of the present invention, in a single-split type retainer for a rolling bearing, a retainer made of resin and having excellent yield is provided wherein, regardless of the thickness, an opening section that opens the split section is formed, and it is possible to adequately return to the initial shape by releasing the force the expands and opens the split section.

### BRIEF DESCRIPTION OF THE DRAWINGS

FIGS. 1A to 1C illustrate a first example of an embodiment of the present invention, where FIG. 1A is a perspective view and illustrates partial construction, FIG. 1B is partial front view that illustrates the state before engaged, and FIG. 1C is a partial front view illustrating the state after engaged.
FIG. 2 is a combined drawing for explaining the fit in the split section of a first example of a retainer, and is an end view of the end section of one side, and a cross-sectional view of the portion of the fitting holes in the end section of the other side.
FIGS. 3A and 3B are drawings for explaining the fit in the split section of a first example of a retainer, where FIG. 3A is a side view that illustrates the state when the retainer is closed, and FIG. 3B is a side view that illustrates the state when the retainer is open.
FIGS.4A and 4B are drawings for explaining the fit in the split section of a retainer of a second example of an embodiment of the present invention, where FIG. 4A is a side view that illustrates the state when the retainer is closed, and FIG. 4B is a side view that illustrates the state when the retainer is open.
FIG. 5 is a partial front view of the construction of the split sections of a retainer of a third example of an embodiment of the present invention, and illustrates the state after engaged.
FIGS. 6A and 6B are partial front views of the construction of the split section of a retainer of a fourth example of an embodiment of the present invention, where FIG. 6A illustrates the state before engaged, and FIG. 6B illustrates the state after engaged.
FIG. 7 is a combined drawing for explaining the fit in the split section of a fourth example of a retainer, and is a cross-sectional view illustrating the end surface of the end section on one side and the portion having a hole in a convex section, and is a cross-sectional view of the end section on the other side.
FIG. 8 is a partial front view of the construction of the split section of a retainer of a fifth example of an embodiment of the present invention, and illustrates the state before engaged.
FIGS. 9A to 9C are drawings of a single-split retainer of a sixth example of an embodiment of the present invention, where FIG. 9A is a perspective view, FIG. 9B is a side view illustrating the closed state, and FIG. 9C is a side view illustrating the state of the opening section when the split section is open.
FIGS. 10A to 10C illustrate a single-split retainer of a seventh example of an embodiment of the present invention, where FIG. 7A is a side view, FIG. 10B is a side view illustrating the state of the opening section when the split section is open, and FIG. 10C is a enlarged side view illustrating the thin section.
FIG. 11A is a side view of a single-split retainer of an eighth example of an embodiment of the present invention, and FIG. 11B is a side view of a single-split retainer of a ninth example.
FIG. 12A is a side view of a single-split retainer of a tenth example of an embodiment of the present invention, and FIG. 12B is a side view of a single-split retainer of an eleventh example.
FIG. 13 is a side view illustrating a single-split retainer of a twelfth example of an embodiment of the present invention.
FIG. 14 is an exploded perspective view illustrating the camshaft of a cylinder head to which a roller bearing having a conventional double-split retainer for a roller bearing is applied.
FIG. 15 is an exploded perspective view illustrating the split section of conventional split-type retainer for a rolling bearing.
FIG. 16 is a perspective view illustrating the split section of conventional single-split-type retainer for a rolling bearing.

### BEST MODES FOR CARRYING OUT THE INVENTION

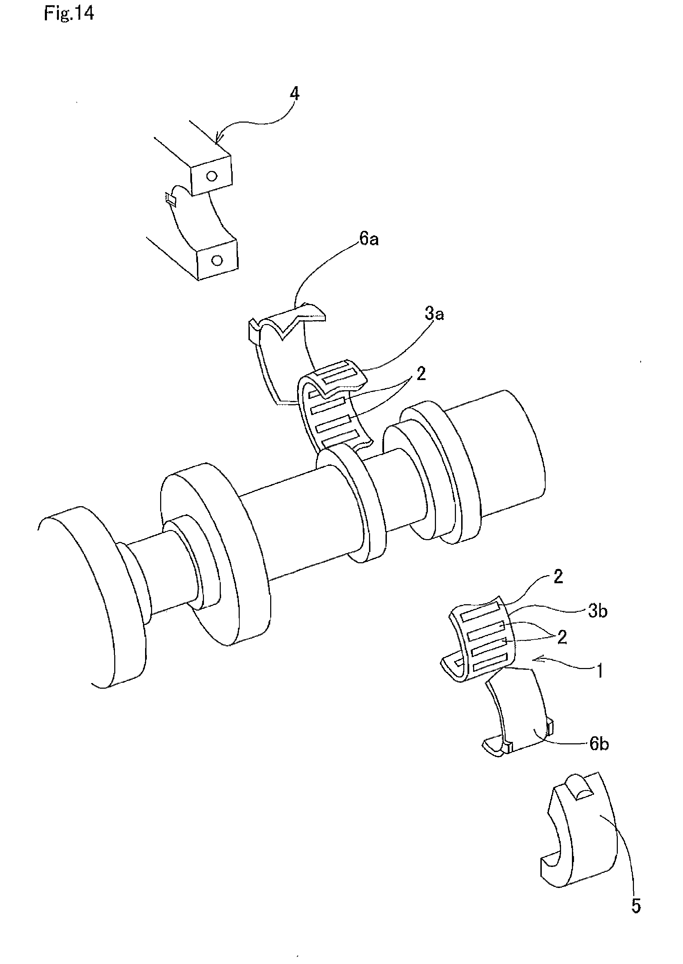

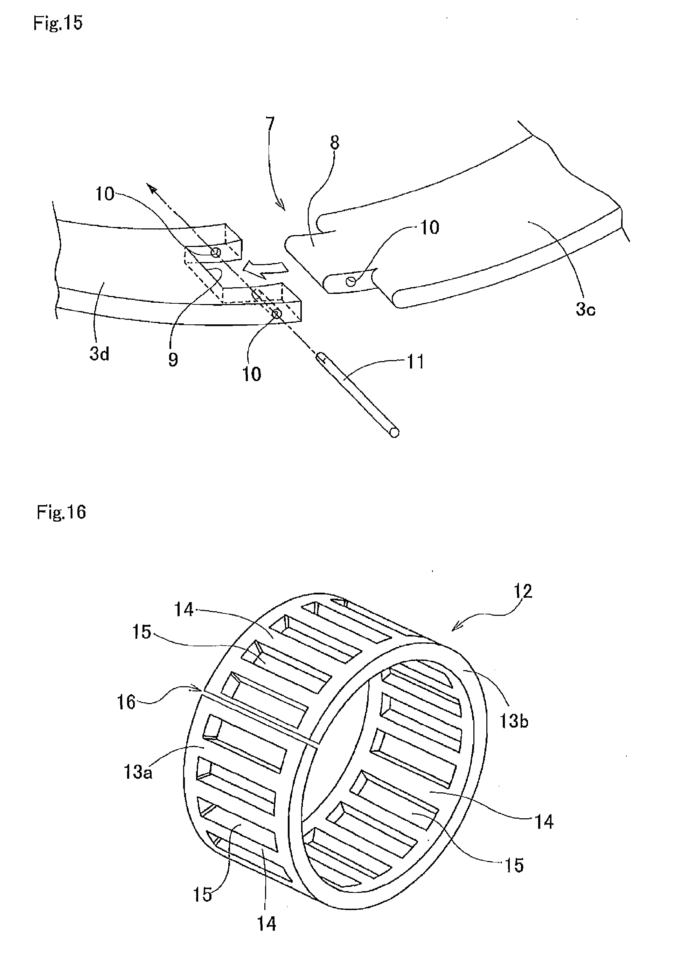

The basic construction of the split-type retainer for a rolling bearing of the present invention is the same as that of the conventional double-split retainer illustrated in FIG. 14, or the conventional single-split retainer illustrated in FIG. 16 and comprises a pair of ring-shaped rim sections 22a, 22b (42a, 42b) that are arranged concentric to each other in the axial direction, and a plurality of column sections 23 (43) that connect these rim sections. Pockets 24 (44) that pass through from the inner circumferential surface to the outer circumferential surface of the retainer 21 (41) are formed between adjacent column sections 23 (43) in the circumferential direction so as to be surrounded by the rim sections 22a, 22b (42a, 42b) and the column sections 23 (43).

The parameters (dimensions, material) of the retainer of the present invention are not particularly limited. As the material, it is possible to use a non heat treated ferrous alloy such as cold rolled steel sheet (SPCC), ultra-low carbon steel (AISI-1010), chromium molybdenum steel (SCM415) and the like, or these materials that have undergone heat treatment such as carburizing, carbonitriding or the like. Alternatively, it is also possible to use a synthetic resin such as polyacetal resin, polyamide resin (nylon 46, nylon 66), polyphenylene sulfide (PPS) and the like. However, in the case of the single-split retainer 41 of a second aspect of the invention, the retainer is preferably made using a thermoplastic resin, and particularly a polyamide resin.

A double-split retainer 21 to which the present invention is applied comprises split sections 25, 26 at two locations in the circumferential direction, and are split in directions orthogonal to the circumferential direction. However, the present invention can also be applied to a split-type retainer for a rolling bearing that has three splits or more. Moreover, a single-split retainer 41 to which the present invention is applied comprises a split section 45 at one location in the circumferential direction, and is split in directions orthogonal to the circumferential direction. In either case, the present invention is an improvement over the conventional retainers 3a to 3d, 12 as illustrated in FIG. 14 and FIG. 16, so in the explanation below, the explanation will center on the improvements, and explanations of portions that are common with the conventional construction will be omitted or simplified.

### [Example 1]

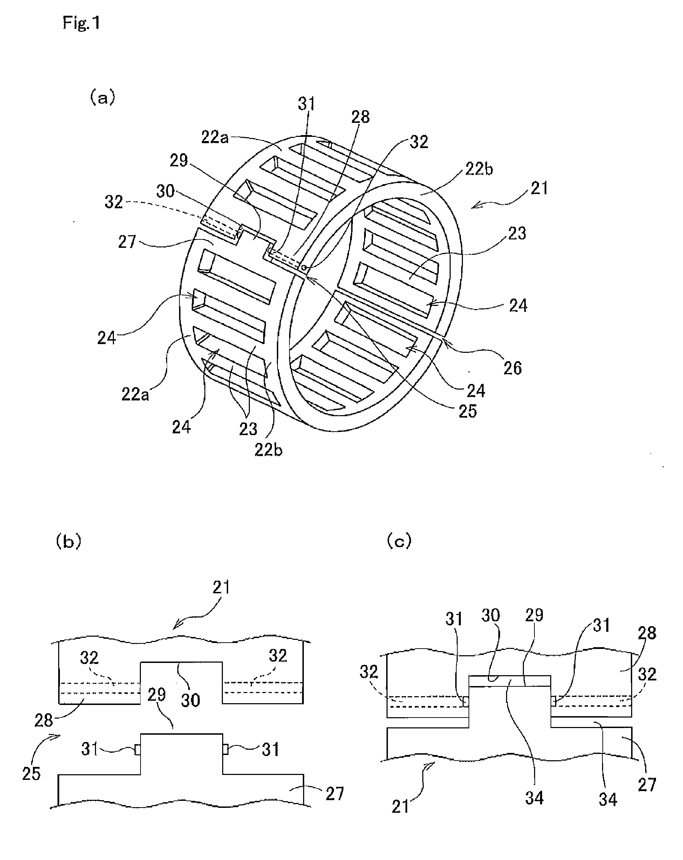

FIG. 1A to FIG. 5 illustrate a first example of an embodiment of a first aspect of the present invention. In this example, as illustrated in FIG. 1A, the retainer 21 is a double-split retainer and comprises two split sections 25, 26. Of these split sections 25, 26, a rectangular convex sections 29 is formed on part of the end section 27 on one side of one of the split sections 25, and protrudes toward the end section 28 on the other side, and a rectangular concave section 30 that is the same size or a little larger than the convex section 20 so as to be able to accommodate the convex section 29 is formed on the end section 28 on the other side, and is such that the part of the end section 28 on the other side is recessed. In this example, the convex section 29 is such that the outside surface in the radial direction, the inside surface in the radial direction, the side surface in the axial direction and the tip end surface in the circumferential direction are all rectangular shaped, however, to represent this shape, the shape will be expressed as "the rectangular shaped outer surface ". Moreover, the concave section 30 is such that the inside surfaces in the axial direction, and the rear end surface in the circumferential direction are all rectangular shape, however, to represent this shape, the shape will be expressed as "the rectangular shaped opening".

A pair of protrusions 31, which will function as first engagement sections, are formed on the outside surfaces of both sides of the rectangular shaped convex section 29. Moreover, a pair of engagement holes 32, which will function as second engagement sections, are formed on the inside surfaces of the concave section 30 with the rectangular shaped opening, such that the engagement holes 32 pass through to the outside surfaces in the axial direction of the end section 28 on the other side and can engage with the protrusions 31 of the convex section 29. However, the pair of protrusion 31 can be set to have an arbitrary contour shape such as a cylindrical shape, spherical shape, conical shape and the like, and the shape of the engagement holes 32 can be set to correspond to that contour shape. Moreover, as long as the shape of the engagement holes 32 is such that the holes 32 are deeper than the protrusions 31, they do not need to penetrate through the end sections 28 of the other side, and a shape such as concave holes that can engage with the protrusions 31, concave grooves that extend in the radial direction along the inside surface of the concave sections 30 can also be used.

In the construction of the engagement section of this example, as illustrated in FIGS. 1A to 1C, after the convex section 29 is inserted inside the concave section 30 and engaged, in that state, the protrusions 31 of the convex section 29 engage with the engagement holes 32 on both sides of the concave section 30. As a result, the convex 29 becomes integrated with the concave section 30, and it is possible to connect the end section 27 on the one side of the two members of the retainer 21 to the end section 28 on the other side. With this construction, collision between the end surfaces in the circumferential direction of the split section 25 is prevented.

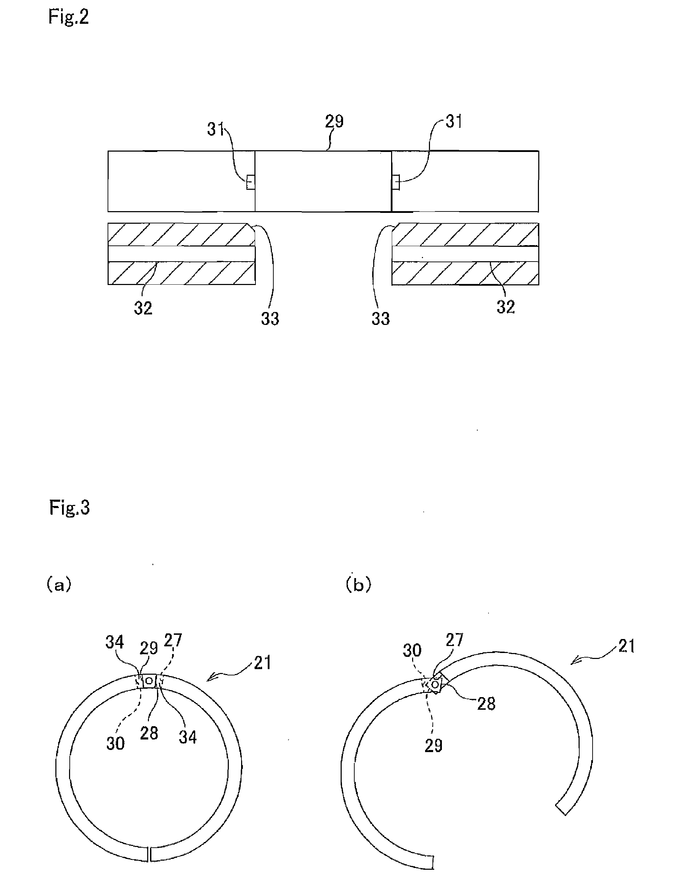

Furthermore, in this example, as illustrated in FIG. 2, in order that the convex section 29 can be easily inserted into the concave section 30, beveled sections 33 are formed on the edges of the ends on the outer-diameter side of the inside surfaces of the concave section 30. In this case, insertion becomes easy when the convex section 29 is inserted from the outside in the radial direction of the concave section 30. However, it is also possible to alternatively or additionally form bevel sections on the edge sections of the ends on the inner-diameter sides of the outside surfaces of the convex section 29, or to reverse positional relationship of these bevel sections from that of this example.

Moreover, in this example, as illustrated in FIG. 1C, and FIGS. 3A and 3B, when the convex section 29 and concave section 30 are rotated around the pair of protrusions 31 as a fulcrum, a space 34 is provided between the tip end surface of the convex section 29 and the rear surface of the concave section 30 so that there is no interference between the convex section 29 and the concave section 30.

In this example, the construction of the engagement section of the present invention is only provided for one split section 25. In this case, after the retainer 21 has been fastened around the inner ring or a member that corresponds to the inner ring such as a rotating shaft, the construction of the engagement section of this split section 25 also prevents collision between end surfaces in the circumferential direction of the split section 26. However, it is also possible to provide the construction of the engagement section of the present invention in this split section 26 as well. Moreover, this example is for the case wherein the present invention is applied to a double-split retainer, however, it is also possible to apply the construction of the engagement section of this example to the split section of a single-split retainer. Furthermore, in regards to the dimensions of the convex section 29 and concave section 30, any arbitrary dimensions can be used as long as the strength and rigidity of the end section 27 of the one end and the end section 28 of the other end of the split section 25 are not affected. In this example, a single convex section 29 is formed, however, a convex sections 29 can be formed at two locations in the axial direction of the retainer 21 by separate protruding sections, and outward facing protrusions can be respectively formed on one of the outside surfaces of each of these separate protruding sections.

### [Example 2]

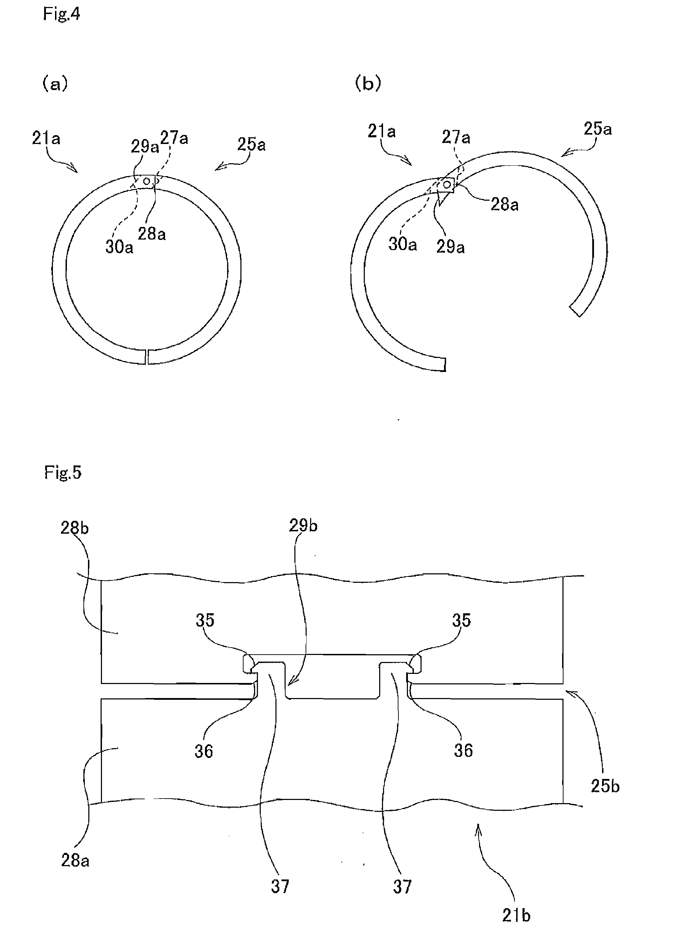

FIGS. 4A and 4B illustrate a second example of an embodiment of a first aspect of the present invention. In the double-split retainer 21 of this example, instead of providing a space 34 in the split section 25a as in the first example, except for the end section in the circumferential direction of the end section 28a on the other side, the tip end surface of the convex section 29a, the rear end surface of the concave section 30a and the end surface in the circumferential direction of the end section 27a on the one side are inclined surfaces that are inclined in essentially the same direction. The angle of inclination of these surfaces can be arbitrary dimensions as long as the strength and rigidity of the end section 27a on one side and the end section 28a on the other side of the split section 25a are not affected. It is also possible to form these inclined surfaces, for example, on only the end sections of one side, and to form the end surfaces of the end sections on the other side without being inclined in the radial direction. The construction and function of the other parts are the same as in the first example.

### [Example 3]

FIG. 5 illustrates a third example of an embodiment of a first aspect of the present invention. In the double-split retainer 21b of this example, convex sections 29b that extend toward the end section 28b on the other side are formed on the end section 27b on one side of the split section 25b. Outward facing hooks 35, which function as a first engagement sections, are formed on both sides in the width direction of the tip end sections in the circumferential direction of the convex sections 29b. A concave section 30b that is recessed in the direction going away from the end section 27b on the one side is formed in the end section 28b on the other side of the split section 25b, and engaging tabs 36, which function as second engagement sections, and that protrude toward the inside in the width direction of the concave section 30b (axial direction of the retainer 21b) from the inside surfaces of the concave section 30b are formed on the end sections in the circumferential direction of the opening.

In this example, the convex section 29b comprises a pair of protruding sections 37 that protrude in the circumferential direction toward the end section 28b of the other side from two locations in the width direction of the end section 27b on the one side, and outward facing hooks 35 are formed on the tip end sections of these protruding sections 37, wherein the hooks 35 easily engage with the engaging tabs 36 due to the elasticity of the protruding sections 37. However, the shapes of the convex section 29b and concave section 30b that includes these hooks 35 and engaging tabs 36 are not limited to the shapes illustrated in the figure, and by devising the size and shape of the hooks 35 and engaging tabs 36 and the resin material of which they are formed, it is also possible to form hooks 35 on the outside of the tip end section of a single convex section 29b. The dimensions of the hooks 35 and the engaging tabs 36 can be arbitrarily set as long as the engagement can be performed easily and suitably, and as long as the strength and rigidity of these members are not affected.

With the construction of the engagement section of this example, after inserting the convex section 29b formed by the pair of protruding sections 37 into the concave section 30b, and engaging these sections, then in this state, by engaging the hook sections 35 of the convex 29b and engaging tabs 36 of the concave section 30b, it is possible to connect the end section 28a on the one side and the end section 29b on the other side. The construction and function of the other parts are the same as in the first example.

### [Example 4]

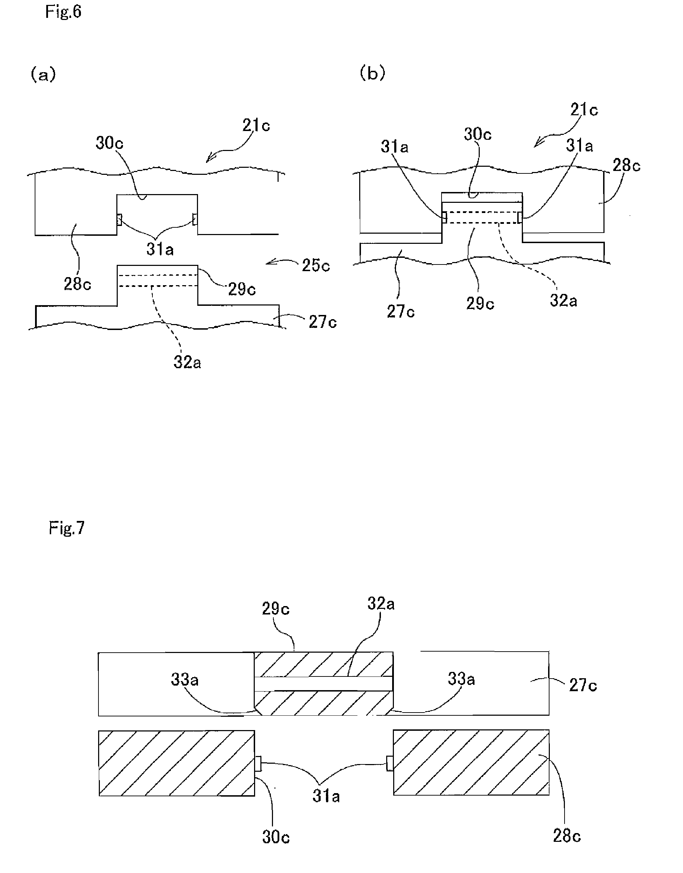

FIG. 6 and FIG. 7 illustrate a fourth example of an embodiment of a first aspect of the present invention. As illustrated in FIG. 6A, in the double-split retainer 21c of this example, opposite from the first example, one engagement hole 32a, which functions as a second engagement section, is formed in the rectangular shaped convex section 29c, and passes horizontally in the axial direction through the convex section 29c, and a pair of protrusions 31a, which function as a first engagement section, are formed on both inside surfaces of the concave section 30, and protrude toward the inside. These protrusions 31a can be set to an arbitrary contour shape such as cylindrical, spherical, conical or the like, and the shape of the engagement hole 32a is set to match that contour shape.

With the construction of the engagement section of this example, as illustrated in FIG. 6B, the convex section 29c is inserted and engaged inside the concave section 30c, and in this state, by the pair of protrusions 31a of the concave section 30c engaging on both sides with the engagement hole 32a in the convex section 29c, the convex section 29c becomes integrated with the concave section 30c, and it is possible to connect the end section 27c on one side of the retainer 21c with the end section 28c on the other side. In this example as well, as long as the engagement hole 32a is deeper than the protrusions 31a, the engagement hole 32a does not need to pass through the convex section 29c, and as long as engagement with the protrusions 31a is possible, shapes such as concave holes, concave grooves that extend in the radial direction on the outside surfaces of the convex section 29, or the like could be used.

In this example, as illustrated in FIG. 7, beveled sections 33a are formed on the end sections on the inner-diameter side of the outside surfaces of the convex section 29c so that the convex section 29c can be easily inserted into the concave section 30c. The construction and functions of the other parts, including variations of the beveled sections 33a, are the same as in the first example.

### [Example 5]

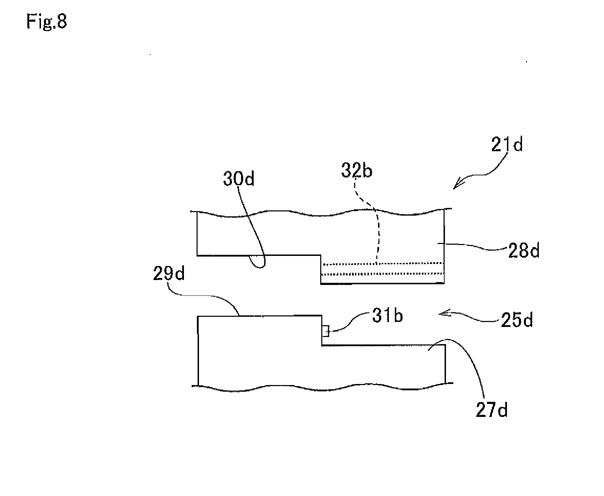

FIG. 8 illustrates a fifth example of an embodiment of a first aspect of the present invention. The double-split retainer 21d of this example comprises a convex section 29d that is formed in half of the end section 27d on one side and protrudes toward the end section 28d on the other side, and a protrusion 31b that is formed on the outside surface in the axial direction of the center side in the axial direction of the convex section 29 so as to protrude outward in the axial direction. On the other hand, a concave section 30d that is recessed in a direction going away from the end section 27d on the one side is formed in half of the end section 28d on the other side on the side that faces the convex section 29d, and an engagement hole 32b is formed in the inside surface of the concave section 30d. This engagement hole 32b is formed so that it passes through the end section 28d on the other side to the outside surface of the retainer 21d on the opposite side from where the concave section 30d is formed, however it is also possible to use other forms as in the first example. The construction and function of other parts are the same as in the first example.

### [Example 6]

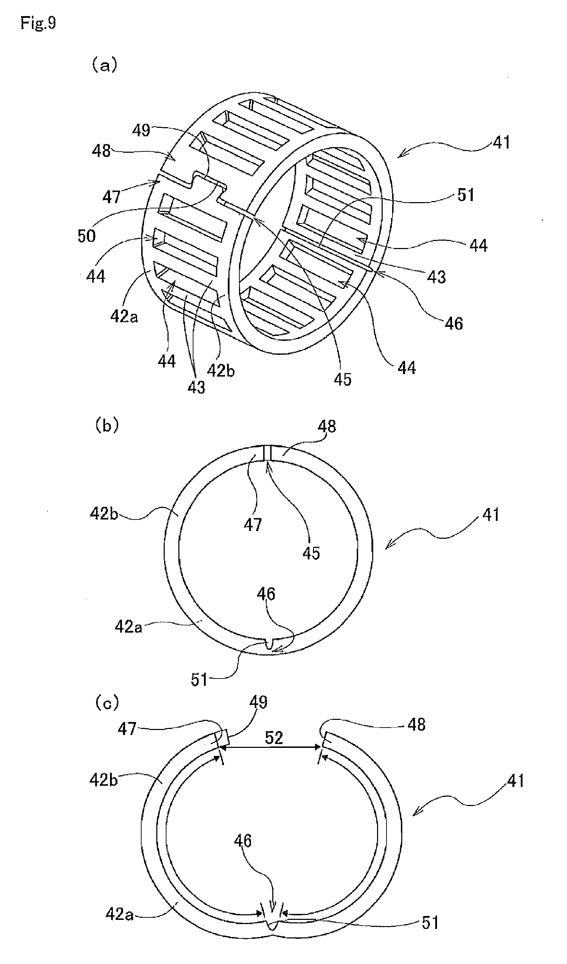

FIGS. 9A to 9C illustrate a sixth example of an embodiment of a first and second aspect of the present invention. In this example, as illustrated in the figures, the retainer is a ring-shaped single-split (one split) retainer, having one split section 45 that is split in directions orthogonal to the circumferential direction, however, overall has an integrated construction.

As illustrated in FIGS. 9A to 9C, in the single-split retainer 41 of this example, a plurality of pockets 44 are formed around the circumferential direction at specified intervals, and rolling bodies (rollers) (not illustrated in the figures) are held in those pockets 44. The retainer 41 comprises a pair of ring-shaped rim sections 42a, 42b that are arranged so as to face each other, and a plurality of column sections 43 that are parallel with each other and are arranged at specified intervals in the circumferential direction extend between these rim sections 42a, 42b and connect these rim sections 42a, 42b. As illustrated in the figure, the column sections 43 are preferably arranged at uniform intervals in the circumferential direction.

Here, in this single-split retainer 41, the rolling bodies that are held in the pockets 44 are long, thin "rollers" having a length that is several times (for example 3 to 10 times) greater than the diameter (for example, 4 mm or greater). This single-split retainer 41 is installed in a bearings (for example, between the outer ring and the inner ring or member corresponding to the inner ring such as a rotating shaft) of various kind of rotating mechanisms with the rolling bodies held in the each of the pockets 44 such that the rolling bodies can each roll, and when the bearing is rotating in that state (for example, when there is relative rotation between the inner and outer rings), the retainer 41 revolves between the inner and outer rings together with the rolling bodies.

The thickness of this single-split retainer 41 is set to 3 mm or greater, and is preferably formed entirely by injection molding using a resin material such as a thermoplastic resin, and particularly is formed using a polyamide resin such as nylon 46 or nylon 66 (registered trademark).

The split section 45 is formed in an area that extends in the circumferential between adjacent pockets 44, and by splitting this area in two, an end section 47 is formed on one side and an end section 48 is formed on the other side. The end sections in the circumferential direction of the end section 47 on the one side and the end section 48 on the other side face each other. A pair of rim sections 42a, 42b extend and are continuous in a ring shape from the end section 47 on the one side to the end section 48 on the other side.

In the single-split retainer 41 of this example, in at least one location in the circumferential direction that is at a position other than the split section 45, a thin section 46 having a thickness in the radial direction that is thinner than other locations is formed in the axial direction, or in other words, across the retainer 41 in the width direction. In the example in the figure, one thin section 46 is formed at a position on the opposite side in the radial direction from the split section 45. Moreover, in this example, the thin section 46 is formed on the inner circumferential surface of the retainer 41, however, the thin section 46 could also be formed on the outer circumferential surface, or could also be formed on both the inner and outer circumferential surfaces. The inner circumferential surface of the retainer 41 in general includes the inner-diameter surfaces of the pair of rim sections 42a, 42b and the plurality of column sections 43, and the outer circumferential surface of the retainer 41 in general includes the surfaces on the outer-diameter side of the pair of rim sections 42a, 42b and the plurality of column sections 43.

More specifically, the thin section 46 is formed along a column section 43 that is located between adjacent pockets 44 in the circumferential direction, and is formed continuously from this column section 43 across the rim sections 42a, 42b. In this example, the thin section 46 is formed in part of the surface on the inner-diameter side of a column section 43 and rim sections 42a, 42b, and is formed in the axial direction as a concave groove 51 having a U-shaped cross section, with the thickness in the radial direction of this portion being less than that in other areas. In other words, the thin section 46 is formed along the outer circumferential surface of the retainer 41.

The shape of the construction for forming the thin section 46 (concave groove: 51) is not limited to having a U-shaped cross section, and other cross-sectional shapes such as a circular arc shape, elliptical shape, triangular shape, trapezoidal shape, rectangular shape and the like can also be used. Moreover, the dimensions of the concave groove 51 can be arbitrarily set as long as the thin section 46 can deform elastically, and the strength and rigidity of the thin section 46 is not affected. Moreover, as long as the thin section 46 can deform elastically, the concave groove does not need to be continuous in the axial direction.

With the single-split retainer 41 of this example, depending on the diameter of the rolling bodies that are held, even when the thickness of the retainer 41 is made thick, by proving a thin section 46 by forming a concave groove 51 in part of the surface in the circumferential direction that is further recessed than other portions, the retainer 41 is elastically deformed only in the thin section 46 when separating the ends of the split section 45 from each other, and as illustrated in FIG. 9C, the portions on both sides can be rotated and expanded with this thin section 46 as the center.

In this case, hardly any stress and accompanying "strain" occur in the portions of the retainer 41 on both sides of the thin section 46, so there is no plastic deformation of the retainer 41, and by deforming the retainer 41 from the initial state as illustrated in FIG. 9B, it is possible to form a desired large opening section 52 between the end section 47 on one side and the end section 48 on the other side as illustrated in FIG. 9C. In this state, the retainer 41 is not damaged or broken, and furthermore, the rolling bodies do not drop from the pockets 44, neither do the rolling bodies shift inside the pockets 44.

When the force expanding the split section 45 is released after an inner ring of a rotating mechanism or a member that corresponds to an inner ring such as a rotating shaft has been housed inside the retainer 41 by way of the opening section 52 that is formed by the expanding split section 45, the retainer 41 returns to the initial state as illustrated in FIG. 9B due to its own returning force (recovery force), and with the retainer 41 holding the plurality of rolling bodies, it is possible to improve and stabilize the yield, and this retainer 41 can be installed in bearings that are used various kinds of rotating mechanisms.

With the construction of the present invention, the diameter of the retainer 41 is set as a small diameter, for example, and as a result, even in cases where in the conventional construction it was difficult to form an opening section 52 by expanding the split section 45, by forming a thin section 46 in the retainer 41, a retainer 41 is provided that is capable of improving and stabilizing yield, and that can be installed in bearings that are used in various kinds of rotating mechanisms.

In the single-split retainer 41 of this example, the rated load (rigidity) of the retainer is decreased due to the formation of the thin section 46, however, this rated load (rigidity) can be maintained at least at the same rated load (rigidity) as an existing double-split retainer. As a result, when the held rolling bodies revolve while the bearing is in operation, for example, the retainer 41 can continue to stably hold the rolling bodies while the durability of the retainer 41 is maintained a constant level.

Incidentally, when the ends of the split section 45 are expanded and separated from each other, and plastic deformation of the thin section 46 occurs, it is conceivable that even when the force expanding the split section 45 is released, that the retainer will not return to the initial shape illustrated in FIG. 9B. The state when the retainer 41 does not return to the initial shape refers to the state wherein the end surfaces in the circumferential direction of the end section 47 on the one side of the split section and the end section 48 on the other side do not face each other in the circumferential direction.

Therefore, in this example, as illustrated in FIG. 9A, a convex section 49 is formed on the end section 47 on the one side of the split section 45 and that convex section 49 protrudes from the center section in the axial direction of the end surface in the circumferential direction toward the end section on the other side, and a concave section 50 is formed in the end section 48 on the other side in the portion of center section in the axial direction of the end surface in the circumferential direction that faces the convex section 49, and is recessed in a direction going away from the end section 47 on the one side.

In this example, the convex section 49 is such that the contour of the outer surface expands in a shape that widens toward the end section 48 on the other side, and is formed overall into a rounded trapezoidal shape; on the other hand, the concave section 50 is such that the contour of the outer surface of the opening widens in a direction going away from the end section 47 on the one end, and is formed overall into a rounded trapezoidal shape such that the convex section 49 can fit inside thereof. With this example, as illustrated in FIG. 9A, when the convex section 49 and concave section 50 are fitted together, the portions on both sides in the width direction of the tip end side of the convex section that expands becoming wider, which are the first engagement section, and the portions on both sides in the width direction of the tip end side of the concave section that expands becoming wider (opening section the width of which becomes narrow in the circumferential direction), which are the second engagement section, engage with each other, so the retainer41 can be held in the initial ring shape. Moreover, in the initial state illustrated in FIG. 9B, by applying an elastic force in a direction that separates the end section 47 on the one side and the end section 48 on the other side, or by adjusting the protruding amount of the convex section 49, it is possible to prevent or reduce the collision between the end sections in the circumferential direction when the bearing is in operation. The other construction and function of this engagement section are the same as in the first example.

### [Example 7]

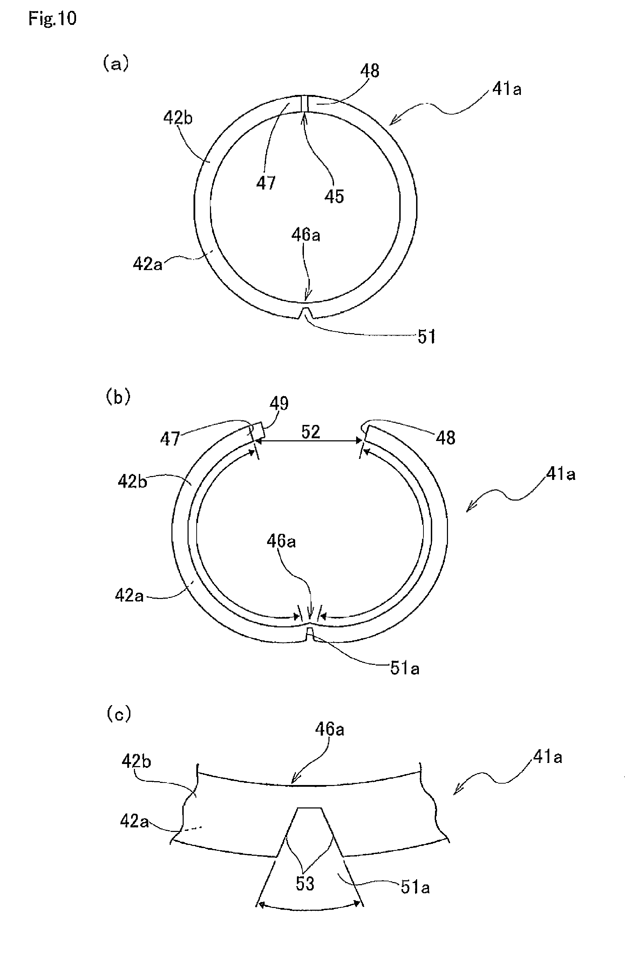

FIGS. 10A to 10C illustrate a seventh example of an embodiment of a first and second aspect of the present invention. In the single-split retainer 41a of this example, differing from the first example wherein one thin section 46 is formed along the outer circumferential surface of the retainer 41, here one thin section 46a is formed along the inner circumferential surface of the retainer 41a. In the example in the figures, the one thin section 46a is formed at a position on the opposite side in the radial direction from the split section 45.

As illustrated in FIGS. 10A to 10C, the thin section 46a is formed along a column section 43 (see FIG. 9A) that is located between adjacent pockets 44 in the circumferential direction, and is continuous from the column section 43 across the rim sections 42a, 42b. In this example, the thin section 46a is formed in the axial direction in part of the surface on the outer diameter side of the column section 43 and rim sections 42a, 42b as a concave groove 51a having a trapezoidal cross section, with the thickness in the radial direction of this portion being less than in other portions. As a result, a thin section 46a is formed along the inner circumferential surface of the retainer 41a.

The shape of the concave groove 51a for forming the thin section 46 in not limited to being the same as that in the sixth example, and the concave groove can be formed by causing the surface to be recessed in various cross-sectional shapes such as U-shaped, circular arc shaped, elliptical shaped, triangular shaped, rectangular shaped and the like.

Here, as illustrated in FIG. 10B, when the thin section 46a is formed along the inner circumferential surface of the retainer 41a, as the split section 45 is expanded and the ends are separated from each other, both sides of the retainer 41a rotate around the thin section 46a as the center of rotation, and the inside surfaces 53 (FIG. 10C) in the circumferential direction of the concave groove move toward each other, and as the split section 45 is opened even further, finally these inside surfaces 53 of the concave groove may come in contact and interfere with each other.

In this case, it becomes difficult to open the split section 45, and when the ends of the split section 45 are opened even further, the retainer 41 will be forced to undergo elastic deformation. As a result, stress and accompanying "strain" will occur in portions other than the thin section 46a of the retainer 41, and depending on the size of that occurring stress and "strain", there is a possibility that the retainer will plastically deform.

Therefore, when forming the thin section 46a along inner circumferential surface of the retainer 41, preferably the angle θ of the opening of the inside surfaces 53 of the concave groove (angle formed by these inside surfaces of the concave groove) will be set in the range 60° ≤ θ ≤ 90° (FIG. 10C). When a thin section 46 is formed along the outer circumferential surface of the retainer 41 as in the sixth example (FIG. 9C), this problem with interference does not occur. The construction and function of other parts are the same as in the sixth example.

### [Examples 8 to 12]

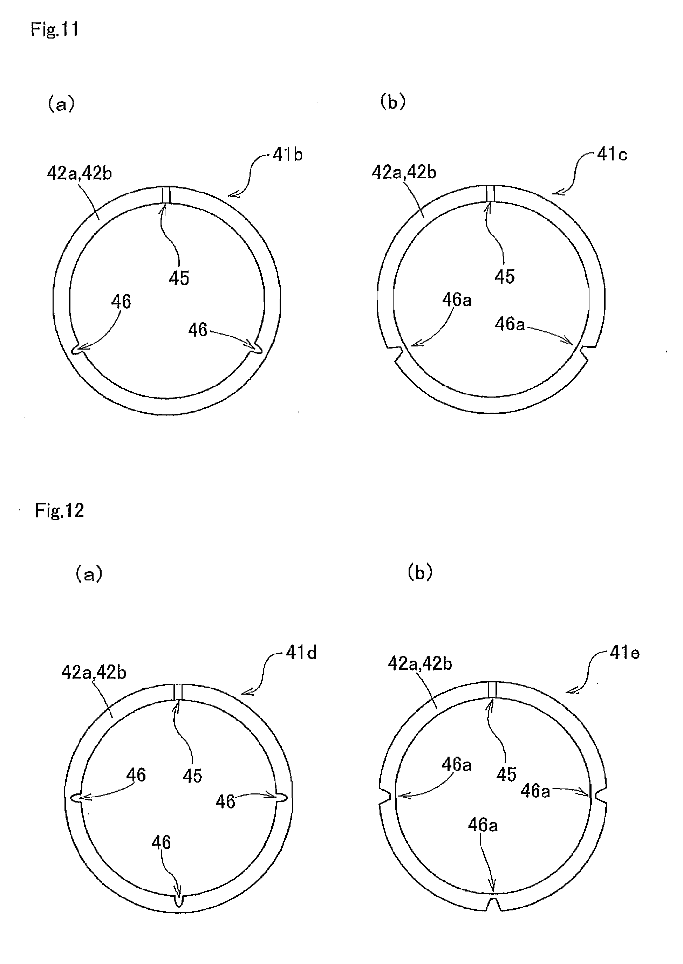

The second aspect of the present invention is not limited to that of the sixth and seventh examples, and various improvements and variations are possible. FIGS. 11A and 11B illustrate eighth and ninth examples of an embodiment of the second aspect of the present invention. In the retainer 41b of the eighth example, concave grooves are formed at two locations on the inner circumferential surface, forming two thin sections 46 along the outer circumferential surface. In the retainer 41c of the ninth example, concave grooves 51a are formed at two locations on the outer circumferential surface, forming two thin sections 46a along the inner circumferential surface.

FIGS. 12A and 12B illustrate tenth and eleventh examples of an embodiment of the second aspect of the present invention. In the retainer 41d of the tenth example, concave grooves 51 are formed at three locations on the inner circumferential surface, forming three thin sections 46 along the outer circumferential surface. In the retainer 41e of the eleventh example, concave grooves 51a are formed at three locations on the outer circumferential surface, forming three thin sections 46a along the inner circumferential surface.

In these examples, the placement of the thin sections 46, 46a can be appropriately set according to the purpose of use and operating conditions of the retainer 41b to 41e, or according to the size and shape of the retainer 41b to 41e, so is not particularly limited. However, preferably, the thin sections 46, 46a are arranged at uniform intervals in the circumferential direction from the split section 45. In other words, preferably the retainers 41b to 41e are such that the split sections 45 and the thin sections 46, 46a have a positional relationship of being evenly spaced with respect to each other in the circumferential direction.

With these examples, by forming a plurality of thin sections 46, 46a on the inner circumferential surface or outer circumferential surface of the single-split retainer 41b to 41e, when the split section 45 is expanded and the ends are separated from each other, the portions on both sides of the retainer can be rotated and opened up around these thin sections 46, 46a, so the opening section 52 (FIG. 9C, FIG. 10B) between the end section 47 on the one side and the end section 48 on the other side can be opened even wider when compared with when there is only one thin section 46, 46a.

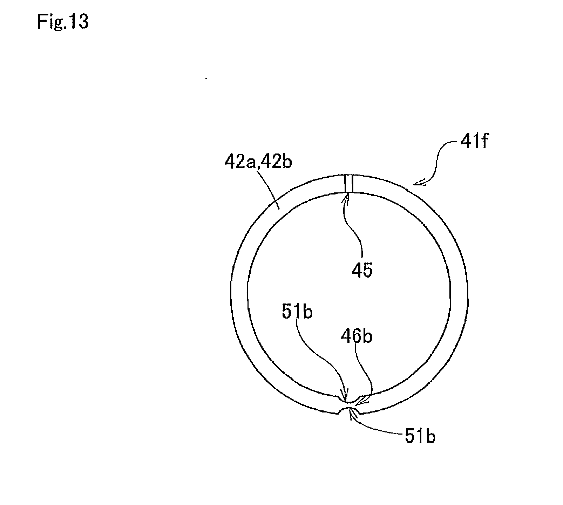

Furthermore, FIG. 13 illustrates a twelfth example of an embodiment of the second aspect of the present invention. In the retainer 41f of this twelfth example, a pair of concave grooves 51b, both having a circular arc shaped cross section and being aligned with each other, are formed in both the inner circumferential surface and outer circumferential surface of the retainer 41f at a position on the opposite side in the radial direction from the split section 45, forming a thin section 46b in the center section in the thickness direction of the retainer 41f.

It is also possible to form thin sections 46b comprising a pair of concave grooves 51b at a plurality of locations in the circumferential direction. Furthermore, by changing the position in the circumferential direction of the concave grooves in both the inner circumferential surface and outer circumferential surface of the retainer, it is possible to form a plurality of different kinds of thin sections at a plurality of locations in the circumferential direction. For example, together with forming one or more thin sections 46 on the outer circumferential surface, it is possible to form one or more thin sections 46a on the inner circumferential surface at different positions in the circumferential direction than the thin sections 46. The construction and function of other parts are the same as in the sixth example.

In regards to the construction of the engagement section of the sixth to twelfth examples, the construction of the engagement sections of the first to fifth examples can be alternatively used, however, when employing only the construction of the thin sections of the sixth to twelfth examples of the second form, it is also possible to use, for example, the construction of the engagement section that uses a connecting pin 11 as in the case in FIG. 15, or to use other known construction.

Embodiments of the present invention were explained above with reference to the drawings. The present invention is not limited to the embodiments illustrated in the drawings. It is possible to make various modifications or changes to the embodiments illustrated in the drawings within the same or equivalent scope of the invention.

### [Industrial Applicability]

The split type retainer for a rolling bearing of the present invention can be widely used in bearings for supporting free rotation of the crankshaft or camshafts in an internal-combustion engine of an automobile engine or the like, as well as in bearings for other various kinds of rotating mechanisms, so the present invention greatly contributes to fields in which roller bearings, and particularly, roller bearings are used.

### [Explanation of the Reference Numbers]

- 1, 1a: Double-split roller bearing
- 2: Roller
- 3a, 3b, 3c, 3d: Double-split retainer
- 4: Cylinder head
- 5: Cap
- 6a, 6b: Outer ring
- 7: Split section
- 8: Convex section
- 9: Concave
- 10: Insertion hole
- 11: Connecting pin
- 12: Single-split retainer
- 13a, 13b: Rim section
- 14: Column section
- 15: Pocket
- 16: Split section
- 17a, 17b: End surface in the circumferential direction
- 21, 21a to 21d: Double-split retainer
- 22a, 22b: Rim section
- 23: Column section
- 24: Pocket
- 25, 25a to 25d: Split section
- 26: Split section
- 27, 27a to 27d: End section on one side
- 28, 28a to 28d: End section on the other side
- 29, 29a to 29d: Convex section
- 30, 30a to 30d: Concave section
- 31, 31a, 31b: Protrusion
- 32, 32a, 32b: Engagement hole
- 33, 33a: Beveled section
- 34: Space
- 35: Hook
- 36: Engaging tab
- 37: Protruding section
- 41, 41a to 41f: Single-split retainer
- 42a, 42b: Rim section
- 43: Column section
- 44: Pocket
- 45: Split section
- 46, 46a, 46b: Thin section
- 47: End section on one side
- 48: End section on the other side
- 49: Convex section
- 50: Concave section
- 51, 51a, 51b: Concave groove
- 52: Opening section
- 53: Inside surfaces of the concave groove

## Claims

1. A split-type retainer for a rolling bearing having a ring shape and comprising at least one split section that is split in a direction orthogonal to the circumferential direction;
the split section comprising:
an end section on one side having a convex section with a first engagement section; and
an end section on the other side having a concave section with a second engagement section that is capable of fitting with the convex section; and
the end section on the one side and the end section on the other side that are capable of being connected by fitting together the convex section and concave section, and engaging the first engagement section and second engagement section.

2. The split-type retainer for a rolling bearing according to claim 1, wherein
the contour of the outer surface of the convex section is trapezoidal, becoming wider going toward the end section on the other side;
the portions on both sides in the width direction of the convex section form a first engagement section;
the contour of the opening surface of the concave section is trapezoidal, becoming wider in the direction going away from the end second on the one side; and
the portions on both sides in the width direction of the concave section form a second engagement section.

3. The split-type retainer for a rolling bearing, wherein
the first engagement section is hook sections that are formed on both sides in the width direction of the tip end section in the circumferential direction of the convex section; and
the second engagement section is engagement tabs that are formed on both sides in the width direction of the end section of the opening in the circumferential direction of the concave section.

4. The split-type retainer for a rolling bearing according to claim 1, wherein
both the outer surface of the convex section and the opening of the concave section are rectangular;
the first engagement section is protrusions that are formed on the side surfaces of the convex section or the side surfaces of the concave section; and
the second engagement section is engagement holes that are formed on the side surfaces of the concave section or the side surfaces of the convex section, the position thereof corresponding to the position of the protrusions.

5. The split-type retainer for a rolling bearing according to claim 1, wherein
the split-type retainer has two or more splits and comprises two or more split sections in the circumferential direction that are split in at least two in the circumferential direction and split in directions orthogonal to the circumferential direction, and
in at least one of these split sections, the end section on one side comprises a convex section having a first engagement section, the end section on the other side comprises a concave section having a second engagement section, and the end section on the one side and the end section on the other side can be connected by fitting together the convex section and concave section, and engaging the first engagement section and second engagement section.

6. The split-type retainer for a rolling bearing having a ring shape and comprising a single split which is split in a direction orthogonal to the circumferential direction at one location in the circumferential direction, the split-type retainer further comprising a thin section formed in the axial direction and in at least one location in the circumferential direction other than the location where the split section exists.

7. The split-type retainer for a rolling bearing according to claim 6, comprising:
a pair of ring-shaped rim sections;
a plurality of parallel column sections that are uniformly spaced in the circumferential direction and that connect the rim sections; and
a plurality of pockets that are formed by the rim sections and the column sections; wherein
the thin section is continuously formed along at least one column section and across the rim sections.

8. The split-type retainer for a rolling bearing according to claim 6, wherein the thin section is formed in at least one of the inner circumferential surface and outer circumferential surface.
